# EUROPÄISCHE PATENTSCHRIFT

(11) **EP 1 786 941 B1**
(45) Veröffentlichungstag und Bekanntmachung des Hinweises auf die Patenterteilung: **01.12.2010**
(21) Anmeldenummer: 05772996.4
(22) Anmeldetag: 18.08.2005
(51) Int. Cl.: C22C 38/38, C22C 38/22

(54) **HÖCHSTFESTER NICHTROSTENDER AUSTENITISCHER STAHL**
HIGHLY RESISTANT AUSTENITIC STAINLESS STEEL
ACIER INOXYDABLE AUSTENITIQUE A HAUTE RESISTANCE

(30) Priorität: 07.09.2004 DE 102004043134
(43) Veröffentlichungstag der Anmeldung: 23.05.2007
(73) Patentinhaber: Energietechnik Essen GmbH, 45143 Essen (DE); Schaeffler Technologies GmbH & Co. KG, 91074 Herzogenaurach (DE); KSB Aktiengesellschaft, 67227 Frankenthal (DE); Bochumer Verein Verkehrstechnik GmbH, 44793 Bochum (DE); Köppern Entwicklungs GmbH, 45529 Hattingen (DE)
(72) Erfinder: BERNS, Hans, 44797 Bochum (DE); GAVRILJUK, Valentin, G., Kiew 252006 (UA)
(74) Vertreter: Grünecker, Kinkeldey, Stockmair & Schwanhäusser Anwaltssozietät
(86) Internationale Anmeldenummer: PCT/EP2005/008960
(87) Internationale Veröffentlichungsnummer: WO 2006/027091

(56) Entgegenhaltungen:
- GB-A- 1 013 239
- US-A- 3 904 401
- US-A- 4 493 733
- US-A- 4 514 236
- B. D. SHANINA ET AL: "Concept of a new high-strength austenitic stainless steel" STEEL RESEARCH, Bd. 73, Nr. 3, 2002, Seiten 105-113, XP008045706 in der Anmeldung erwähnt

## Beschreibung

Die vorliegende Erfindung betrifft einen austenitischen Stahl, sowie ein Verfahren zur Herstellung desselben und eine Verwendung des Stahles.

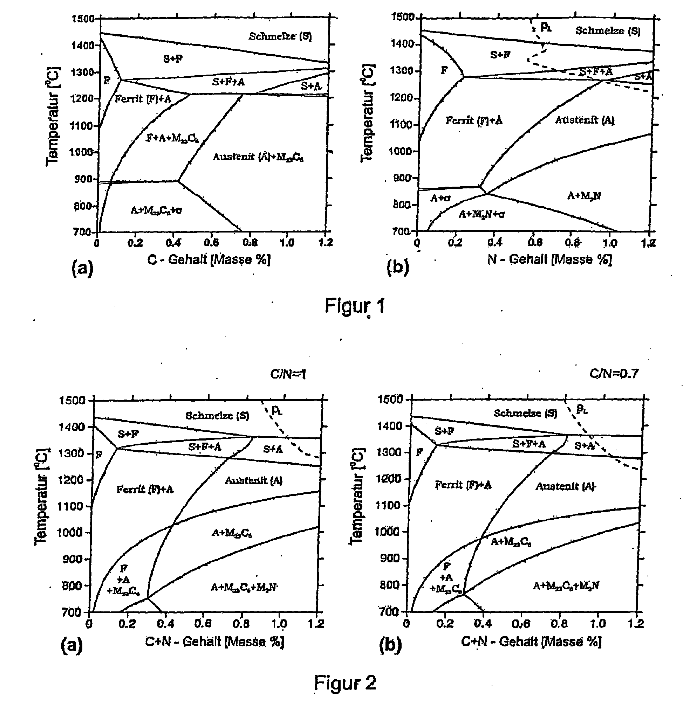

Die Festigkeit austenitischer Stähle wird besonders durch interstitiell gelöste Atome der Elemente Kohlenstoff und Stickstoff gesteigert. Um das flüchtige Element Stickstoff in der Schmelze zu lösen, werden vor allen Chrom und Mangan zulegiert, die eine Senkung der Stickstoff-Aktivität hervorrufen. Während Chrom allein die Ferritbildung unterstützt, lässt sich mit Mangan durch Lösungsglühen ein austenitisches Gefüge einstellen und durch Abschrecken in Wasser bis auf Raumtemperatur stabilisieren. Am Beispiel einer Eisenlegierung mit je 18 Masse-% an Chrom und Mangan wird in Figur 1 anhand berechneter Zustandsdiagramme der Einfluss von Kohlenstoff und Stickstoff dargestellt. Die Rechnung beruht auf thermodynamischen Stoffdaten, die aus dem Schrifttum in Datenbanken zusammengetragen und für die Darstellung von Phasengleichgewichten aufbereitet sind, "Thermo-Calc, User's Guide, Version N, Thermo-Calc Software AB, Stockholm Technology Park, Stockholm".

Aus Figur 1 a geht hervor, dass bei 1 Masse-% C keine homogener Austenit auftritt. Chromreiche Karbide verhindern eine ausreichende Passivierung der Matrix, so dass der Stahl Cr18Mn18C1 (hierbei ist die Zusammensetzung auf Masse-% bezogen) trotz des hohen Chromgehaltes nicht zu den nichtrostenden Stählen zählt. Wird Kohlenstoff durch Stickstoff ersetzt, so stellt sich durch Lösungsglühen bei z.B. 1100°C ein homogen austenitisches, nichtrostendes Stahlgefüge ein, wie in Figur 1b dargestellt. Der eingetragene Gleichgewichtsluftdruck p_{L} von 1 bar lässt erkennen, dass die Schmelze rund 0.55 Masse-% Stickstoff aufnimmt, der jedoch bei der primär ferritischen Erstarrung zum Ausgasen neigt. Ohne Erhöhung des Druckes ist daher ein Gehalt von 1 Masse-% Stickstoff im Austenit gar nicht zu erreichen. Bei einem Stahl mit 1 Masse-% Kohlenstoff besteht das Problem der Druckabhängigkeit nicht.

Die Entwicklung nichtrostender austenitischer Stähle mit hoher Festigkeit durch interstitielle Atome wird, wie in Figur 1 a dargestellt, durch die mangelnde Löslichkeit von Kohlenstoff im Austenit und nach Figur 1b durch die mangelnde Löslichkeit von Stickstoff In der Schmelze bei normalem Atmosphärendruck begrenzt

Zur Überwindung dieser Grenze sind unterschiedliche Ansätze bekannt. Ein Ansatz betrifft den gleichzeitigen Einsatz von Chrom und Mangan, (Cr + Mn)-Ansatz. Hierbei wird der Gehalt an löslichkeitsfördernden Elementen Chrom und Mangan soweit angehoben, dass bis zu 1 Masse-% Stickstoff unter Atmosphärendruck in der Schmelze und im Austenit gelöst werden können, hierzu wird auf den Stahl A in der nachfolgenden Tabelle 1 verwiesen. Um Nitridausscheidungen zu vermeiden, muss die Lösungsglühtemperatur auf ungefähr 1150°C angehoben werden. Ein weiterer Nachteil ist die Einengung des Schmiedetemperaturbereichs und die Gefahr von Kantenrissen beim Warmumformen.

Ein anderer Ansatz sieht die gleichzeitige Zugabe von Kohlenstoff und Stickstoff, (C + N)-Ansatz, vor, wie z.B. in B.D. Shanina, V.G. Gavriljuk, H. Bems, F. Schmalt: Steel research 73 (2002) 3 Seiten 105-113 ausgeführt Hierbei wird die Erhöhung der Konzentration an freien Elektronen im Austenitgitter durch gleichzeitiges Lösen von Kohlenstoff und Stickstoff ausgenutzt Dadurch wird der Austenit stabilisiert, d.h. der Löslichkeitsbereich für interstitielle Elemente erweitert Da der Stickstoff zum Teil durch Kohlenstoff ersetzt wird, kann sein Ausgasen aus der Schmelze bei geringerem Chrom- und Mangangehalt vermieden werden, als nach dem (Cr + Mn)-Ansatz erforderlich. Bisher wurde nach dem (C + N)-Ansatz ein CrMn-Stahl mit einem (C + N)-Gehalt von rund 0.8 Masse-% unter Atmosphärendruck erschmolzen, vgl. hierzu Stahl B der nachfolgenden Tabelle 1. Auch die Stähle C und D gemäß der nachfolgenden Tabelle 1 sind dieser Gruppe zuzurechnen.

**Tabelle 1**

| Stahl | Cr | Mn | C | N | sonstige |
|---|---|---|---|---|---|
| A | 21 | 23 | <0,1 | 0,9 | 0,7 Mo |
| B | 14,7 | 17,2 | 0,39 | 0,43 | - |
| C | 12,9 | 19,3 | 0,38 | 0,49 | - |
| D | 19,2 | 18,4 | 0,5 | 0,54 | 0,5 Ni |

Unter den offen erschmolzenen Stählen mit hohem interstitiellen Gehalt sind CrNi-Stähle nicht zu finden, da Nickel wie Silizium die Löslichkeit für Kohlenstoff und Stickstoff verringern. Die R_{p0.2}-Drehgrenze des Standardstahles dieser Gruppe X5CrNi18-10 beträgt rund 220 Mpa. Die bekannten Chrom-Mangan-Stähle erreichen mehr als den doppelten Wert. Hinzu kommt, dass sie eine hohe wahre Bruchfestigkeit R aufweisen, was durch eine starke Kaltverfestigung mit entsprechend großer Gleichmaßdehnung A_{g} bedingt ist. In dieser Kaltverfestigungsfähigkeit liegt auch die Ursache des hohen Verschleißwiderstandes dieser hochfesten austenitischen Stähle.

Im Folgenden wird kurz auf weiter bekannte korrosionsbeständige austenitische Stähle bezug genommen.

Ein bekannter Chrom-Mangan-Stahl ist z.B. in der CH 202283 beschrieben. Dabei umfasst der Chrom-Mangan-Stahl 0.01 bis 1,5 % Kohlenstoff, 5 bis 25% Chrom und 10 bis 35% Mangan, sowie einen Stickstoffgehalt von 0,07 bis 0,7 %. Aus der beigefügten Tabelle wird jedoch deutlich, dass gemäß dieser Offenbarung werden jedoch sowohl Kohlenstoff als auch Stickstoff eher im unterem Bereich der angegebenen Menge eingesetzt und hierdurch bereits ausreichend gute Ergebnisse erzielt werden.

Ferner ist aus der US 4493733 ist ein korrosionsbeständiger, nichtmagnetischer Stahl bekannt, umfassend 0,4 oder weniger % Kohlenstoff, 0,3 bis 1 % Stickstoff, 12 bis 20 % Chrom, 13 bis 25 % Mangan und weniger als 2 % Silizium. Ferner kann der Stahl gemäß der angegebenen Zusammensetzung bis zu 5% Molybdän enthalten. Auch hier wird aus der Tabelle insbesondere deutlich, dass ein möglichst geringer Kohlstoffgehalt bevorzugt ist, um gute Eigenschaften des fertigen Stahl zu erzielen.

Eine weitere austenitische korrosionsbeständige Legierung ist aus der EP 0875591 bekannt, wobei diese Legierung insbesondere für Gegenstände und Bauteile eingesetzt wird, die zumindestens teilweise in Berührungskontakt mit Lebewesen kommen. Hierbei umfasst die Legierung 11 bis 24 Gew.-% Cr, 5 bis 26 Gew.-% Mn, 2,5 bis 6 Gew.-% Mo, 0,1 bis 0,9 Gew.-% C und 0,2 bis 2 Gew.-% N. Hierbei richtet sich das Augenmerk insbesondere auf erhöhte Kohlenstoffgehalte und basiert auf der Erkenntnis, dass Kohlenstoff in fester Lösung die Beständigkeit gegen Spaltkorrosion austenitischer rostfreier Stähle in saueren Chloridlösungen erhöht

Ferner die betrifft die DE 19513407 die Verwendung einer austenitischer Stahllegierung für hautverträgliche Gegenstände, wobei die Stahllegierung bis zu 0,3 Masse-% Kohlenstoff, 2 bis 26 Masse-% Mangan, 11 bis 24 Masse-% Chrom, mehr als 2,5 bis 5 Masse-% Molybdän und mehr als 0,55 bis 1,2 Masse-% Stickstoff, Rest Eisen und unvermeidbare Verunreinigungen umfasst. Hierbei wird in Bezug auf den Kohlenstoffanteil ausgeführt, dass schon leicht erhöhte Kohlenstoffgehalte zu einer Beeinträchtigung der Korrosions- bzw. Spannungsrisskorrosionswiderstandes führen, und daher sollte der Anteil an Kohlenstoff so klein wie möglich, vorzugsweise kleiner 0,1 Masse-% sein.

Das Dokument D1 US-A-4 514 236 offenbart einen austenitischen Stahl, dessen Zusammensetzung in Gew.-% enthält: ≤ 0,5% C; 12-20% Mn; ≤ 1 % Si; ≤ 0,1 % P; ≤ 0,1% S; ≤ 20%; Cr; ≤ 1 % Mo; ≤ 1 % Ni; 0,2-0,6% N; 0,2-1,0% V; ≤ 1% Nb; Rest Fe mit unvermeidbaren Verunreinigungen.

Aufgabe der vorliegenden Erfindung ist, einen korrosionsbeständigen , austenischenen Stahl bereit zu stellen, welcher sich durch gute Korrosionsbeständigkeit, sowie durch besonders hohe Festigkeit und Verschleißbeständigkeit auszeichnet

Diese Aufgabe wird durch einen nichtrostenden, austenitischen Stahl mit der folgenden Zusammensetzung in Masse-% gelöst, 16 bis 21 % Chrom, 16 bis 12 % Mangan, 0,5 bis 2,0 % Molybdän, insgesamt 0,80 bis 1,1 % Kohlenstoff und Stickstoff, und mit einem Kohlenstoff / Stickstoff-Verhältnis von 0,5 bis 1,1 Rest Eisen, sowie einem Gesamtgehalt von kleiner gleich 2,5% anerschmelzungsbedingten Verunreinigungen.

Der erfindungsgemäße Stahl zeichnet sich durch besonders hohe Festigkeit und gute Korrosionsbeständigkeit in verschiedensten Umgebungen aus, und bietet daher einen Vielzahl von möglichen Einsatzbereichen. Darüber hinaus lässt sich der Stahl kostengünstig herstellen, so dass er für verschiedenste Verwendungen geeignet ist, insbesondere auch für Anwendungen, bei welche der Einsatz entsprechender Stähle aus Kostengründen bisher nicht erfolgte.

Der erfindungsgemäße Stahl geht von dem (C + N)-Ansatz aus, erweitert diesen jedoch. So wird der interstitielle Legierungsgehalt des homogenen Austenits auf 0,80 bis 1,1 Masse-% Kohlenstoff und Stickstoff eingestellt, um Dehngrenze, Bruchfestigkeit und Verschleißwiderstand auf ein hohes Maß zu bringen. Erfindungsgemäß wird das Kohlenstoff/Stickstoff Masseverhältnis auf zwischen 0,5 und 1,1 eingestellt, um zu ermöglichen, dass der Stahl bei normalem Atmosphärendruck von rund ein bar geschmolzen werden und in einem breiten Temperaturbereich des homogenen Austenits warm umgeformt werden kann.

Im Gegensatz zu dem bekannten Stand der Technik gelingt es durch Einhaltung eines Kohlenstoff / Stickstoff Verhältnisses, einen hohen interstitiellen Gehalt bei offener Erschmelzung im Stahl zu lösen und dadurch hervorragende Festigkeitseigenschaften zu erzielen, ohne dass der Schmiedebereich eingeengt und der substituierte Legierungsgehalt angehoben werden muss, wie es bei Stählen der Fall ist, die unter Atmosphärendruck erschmolzen und allein durch Stickstoff auf hohe Festigkeit gebracht werden. Hinzu kommt, dass der Nachteil geringer Korrosionsbeständigkeit von CrMn- gegenüber CrNi-Stählen bereits durch einen geringen Mo-Zusatz wettgemacht wird, der in Kombination mit N die für die vorgesehene Verwendung erforderliche Korrosionsbeständigkeit sicherstellt.

Gemäß einer bevorzugten Ausführungsform der Erfindung beträgt der Gehalt an Kohlenstoff und Stickstoff insgesamt 0,80 bis 0,95 Masse-%. Bei anderen Ausführungsformen hat sich eine Gehalt an Kohlenstoff und Stickstoff von insgesamt 0,95 bis 1,1 Masse-% bewährt. Durch die Einstellung des Gesamtsgehalts an Kohlenstoff und Stickstoff kann direkt auf die Dehngrenze Einfluss genommen und so die Zusammensetzung des Stahles der gewünschten Verwendung angepasst werden.

Gemäß einer weiteren bevorzugten Ausführungsform beträgt der Gehalt an Molybdän 0,5 bis 1,2 Masse%. Werkstücke, die aus einem Stahl mit dem angegebenen Molybdängehalt hergestellt werden, haben sich insbesondere für den Einsatz als besonders geeignet erwiesen, bei welchem die Werkstücke atmosphärischer Korrosion unterliegen.

Vorteilhafterweise kann der Molybdängehalt mehr als 1,2 bis 2,0 Masse-% betragen. Ein entsprechender Molybdängehalt eignet sich insbesondere für aus dem Stahl gefertigte Werkstücke, die im Einsatz der Korrosion durch Halogenidionen ausgesetzt sind.

Gemäß einer weiteren bevorzugten Ausführungsform kann vorgesehen sein, dass der Gehalt an Nickel als schmelzungsbedingte Verunreinigung weniger als 0,2 Masse-% beträgt. Ein entsprechend hergestellter Stahl, kann insbesondere auch für Werkstücke eingesetzt werden, die in zeitweisem Kontakt mit dem menschlichen Körper stehen.

Vorteilhafterweise kann der korrosionsbeständige austenitische Stahl offen, d.h. unter normalem Atmosphärendruck von in etwa 1 bar geschmolzen werden. Durch diese offene Erschmelzung werden unter anderem die Kosten bei der Herstellung deutlich gesenkt

Gemäß einer weiteren bevorzugten Ausführungsform kann die 0,2 Dehngrenze nach dem Lösungsvorgang 450 MPa bzw. in einer anderen Ausführungsform von 550 MPa überschreiten. Demzufolge lässt sich der Stahl durch die gewählte Zusammensetzung den geforderten Eigenschaften der gewünschten späteren Verwendung anpassen. Vorteilhafterweise kann der erfindungsgemäße Stahl zur Herstellung von hochfesten, nichtrostenden, verschleißbeständigen und/oder nichtmagnetisierbaren Werkstücken eingesetzt werden.

Die vorliegende Erfindung stellt des weiteren ein Verfahren zur Herstellung eines korrosionsbeständigen, austenitischen Stahles mit der oben genannten Zusammensetzung zur Verfügung, durch Erschmelzen unter einem Atmosphärendruck von rund 1 bar und anschließende Formgebung.

Da der Stahl durch herkömmliche Verfahrensschritte hergestellt und weiterverarbeitet werden kann, sind hier keine zusätzlichen Vorrichtungen notwendig, um den erfindungsgemäßen Stahl herzustellen.

Vorteilhafterweise wird die Formgebung gewählt aus der Gruppe umfassend Gießen, Pulvermetallurgie, Umverformen und Schweißen. Es wird deutlich, dass hier die verschiedensten Formgebungsverfahren eingesetzt werden können, um dem Stahl die gewünschte Form zu verleihen, so dass hier auch unterschiedlichste Werkstücke ausgebildet werden können.

Vorteilhafterweise kann der Stahl als Schicht auf ein metallisches Substrat aufgebracht werden.

Die vorliegende Erfindung betrifft ferner die Verwendung des erfindungsgemäßen Stahles als verschleißbeständige Werkstücke zur Gewinnung, Aufbereitung und Verbauung mineralischer Güter.

Gemäß einer weiteren Ausführungsform kann der Stahl für nichtmagnetisierbare Kappenringe, die kaltverfestigt sein können, in elektrischen Generatoren eingesetzt werden.

Vorteilhafterweise kann der erfindungsgemäße Stahl für nichtmagnetisierbare Wälzlager, die kaltverfestigt sein können und in der Nähe starker Magnetfelder eingesetzt werden, verwendet werden.

Gemäß einer weiteren vorteilhaften Ausführungsform kann der erfindungsgemäße Stahl für nichtmagnetisierbare Rahmen oder Halterungen starker Magnetspulen zur Aufnahme der mechanischen Kräfte verwendet werden.

Gemäß einer noch anderen Ausführungsform kann der erfindungsgemäße Stahl aufgrund seines hohen plastischen Arbeitsvermögens für Bauteile verwendet werden, die die auftretende Stoßenergie durch plastische Verformung verzehren. Entsprechende Bauteile eignen sich insbesondere zum Einsatz beim Aufprall von Fahrzeugen.

Eine bevorzugte Ausführungsform der vorliegenden Erfindung wird nachfolgend anhand einer Zeichnung näher erläutert.

Es zeigt:
- Figur 1 a: ein berechnetes Zustandsdiagramm für einen bekannten Stahl mit 18 Mas- se-% Cr und 18 Masse-% Mn, welcher mit Kohlenstoff legiert ist,
- Figur 1 b: ein berechnetes Zustandsdiagramm für einen bekannten Stahl mit 18 Mas- se-% Cr und 18 Masse-% Mn, welcher mit Stickstoff legiert ist,
- Figur 2 a: ein berechnetes Zustandsdiagramm für einen erfindungsgemäßen Stahl mit 18 Masse-% Cr und 18 Masse-% Mn, sowie Kohlenstoff und Stickstoff, wobei das Kohlenstoff / Stickstoffverhältnis 1 beträgt,
- Figur 2 b: ein berechnetes Zustandsdiagramm für einen erfindungsgemäßen Stahl mit 18 Masse-% Cr und 18 Masse-% Mn, sowie Kohlenstoff und Stickstoff, wobei das Kohlenstoff / Stickstoffverhältnis 0,7 beträgt,

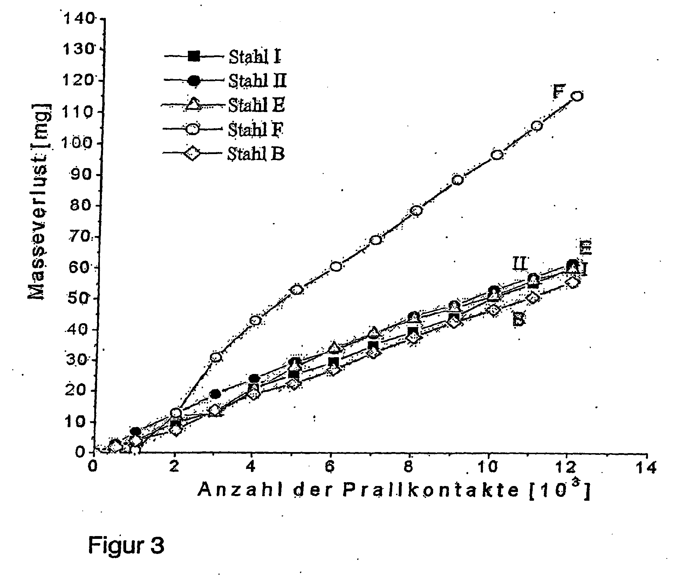

- Figur 3: die Ergebnisse der im Prallverschleiaversuch ermittelten Massenabträge für die untersuchten austenitischen Stähle.

In Figur 2 ist die Auswirkung des C/N Masseverhältnisses auf den Gleichgewichtszustand am Beispiel eines Stahles mit je 18 Masse-% an Chrom und Mangan dargestellt. Die Drucklinie in Figur 2 a zeigt an, dass die Schmelze bei C/N = 1 rund 1 Masse-% C+N aufnehmen kann, was bei einer Lösungsglühtemperatur von 1.150°C zu homogenem Austenit führt Entsprechend lässt Figur 2 b erkennen, dass bei C/N = 0,7 rund 0,9 Masse-% C+N von der Schmelze aufgenommen werden und eine Lösungsglühtemperatur von 1.100°C ausreicht, um homogenen Austenit einzustellen. Im Vergleich mit der Figur 1 wird deutlich, dass durch gleichzeitiges Legieren mit C+N eine hohe Löslichkeit dieser Elemente sowohl in der Schmelze wie auch im Austenit erzielt wird.

Beträgt der substituierte Legierungsgehalt jeweils 16 bis 21 Masse-% für Chrom und für Mangan, wird die nötige Löslichkeit für Stickstoff erreicht und der Austenit stabilisiert. Mit 0,5 bis 2 Masse-% Molybdän wird die Korrosionsbeständigkeit (insbesondere gegen Lochkorrosion durch Chloridionen) verbessert, die in der Regel für CrMn-Austenite niedriger ausfällt als für CrNi-Austenite. Dabei wird ein synergistischer Effekt von N + Mo ausgenutzt, so dass bereits 0,5 Masse-% Mo eine spürbare Verbesserung mit sich bringen. Molybdängehalte über 2 Masse-% engen den Schmiedebereich wieder ein und werden deshalb ausgeschlossen.

Die chemische Zusammensetzung zweier Varianten I und II des erfindungsgemäßen Stahles ist in der nachfolgenden Tabelle 2 angeführt Ihre Verschmelzung und das Vergießen zu Blöcken erfolgt offen an Luft unter Atmosphärendruck von rund 1 bar. Die Blöcke wurden in einer Hitze auf Stabstahl gewalzt, ohne dass Risse oder andere Fehler auftraten. Auch die weitere Warmumformung durch Schmieden auf kleinere Probeabmessungen verlief fehlerfrei.

Die weiteren in Tabelle 2 angegebenen Stähle sind herkömmlich erhältliche Stähle, d.h. der Stahl E ist ein nichtkorrosionsbeständiger Manganhartstahl X120Mn12 und der Stahl II ein nichtrostender CrNi-Stahl X5CrNi18-10.

**Tabelle 2**

| Stahl | | | Zusammensetzung | | | |
|---|---|---|---|---|---|---|
| | Cr | Mn | Ni | Mo | C | N |
| I | 18,8 | 18,9 | 0,4 | 0,6 | 0,49 | 0,58 |
| II | 18,2 | 18,9 | 0,3 | 0,7 | 0,35 | 0,61 |
| E | 0,17 | 12,06 | 0,13 | - | 1,19 | 0,001 |
| F | 18,67 | 1,91 | 9,04 | - | 0,004 | 0,05 |

Die im Zugversuch nach DIN EN 100021 bei Raumtemperatur ermittelten mechanischen Eigenschaften der beiden in Tabelle 2 erfindungsgemäßen Stähle sind In Tabelle 3 dargestellt und werden mit denen des nichtrostenden austenitischen Standardstahls (F) = X5CrNi18-10 und des verschieißbeständigen Manganhartstahles (E) = X120Mn12 verglichen, der zwar austenitisch aber nicht korrosionsbeständig ist. Bei dem Stahl B handelt es sich um eine schwach korrosionsbeständige Versuchslegierung. Die erfindungsgemäßen Varianten I und II sind den Vergleichsstählen in Dehngrenze und Zugfestigkeit deutlich überlegen.

**Tabelle 3**

| Stahl | I | II | B | E | F |
|---|---|---|---|---|---|
| R_{p0.2} (MPa) | 604 | 600 | 494 | 370 | 221 |
| Rₘ (MPa) | 1075 | 1062 | 951 | 829 | 592 |
| R (MPa) | 2545 | 2547 | 2635 | 1131 | 1930 |
| A_{g} (%/0) | 62 | 61 | 68 | 45 | 70 |
| A₅ (%) | 73,5 | 73,5 | 78 | 46 | 83 |
| Z (%) | 52,0 | 68,7 | 68 | 33 | 86 |
| R_{p0.2}xZ/10⁴ | 3,14 | 4,12 | 3,35 | 1,22 | 1,90 |

Figur 3 zeigt den Widerstand gegen Prallverschleiß. An zwei Armen eines Rotors befestigte Probeplatten wurden senkrecht von Partikeln gebrochener Grauwacke mit einer Siebgröße von 8 bis 11 mm und einer relativen Geschwindigkeit von 26 m/s getroffen. Der Masseverlust ist über der Anzahl von Partikelkontakten aufgetragen und zeigt, dass die erfindungsgemäßen Varianten dem nicht korrosionsbeständigen Manganhartstahl ebenbürtig sind, den nichtrostenden Standartstahl F jedoch deutlich unterbieten.

Die Varianten I und II bleiben auch nach plastischer Verformung im Prallverschleißversuch nicht magnetisierbar, was in der niedrigen relativen magnetischen Permeabilität µᵣₑₗ=1.0012 zum Ausdruck kommt, die mit einem dafür vorgesehenen, handelsüblichen Permeabilitätstaster auf der Prallverschleißfläche gemessen wurde. Für Manganhartstahl E beträgt µᵣₑₗ=1.0025. Der nichtrostende Standartstahl kommt durch die Bildung von Verformungsmartensit auf µᵣₑₗ=1.1 und ist damit schwach magnetisierbar

Im Dauertauchversuch nach DIN50905 Teil 1 und 2 wurden die erfindungsgemäßen Varianten I und II in einer wässrigen Lösung mit 1 Masse-% H₂SO₃ bei pH=2 und Raumtemperatur über 120 h nicht angegriffen. Mit der Prüflösung wurde saures Grubenwasser in einem Bergwerk nachgestellt. Der bisher verwendete Manganhartstahl E zeigte dagegen einen deutlichen Masseverlust durch Korrosion, wie aus Tabelle 4 hervorgeht. Der nichtrostende Standartstahl F erweist sich zwar als beständig, eignet sich aber wegen seines geringen Verschleißwiderstandes nicht zum betrieblichen Einsatz. Aus der Ermittlung von Stromdichte-Potential-Kurven nach DIN50918 in wässriger Lösung mit 3 Masse-% NaCl ergeben sich bei Raumtemperatur die Durchbruchspotentiale für beginnende Lochkorrosion nach Tabelle 4. Sie lassen darauf schließen, dass die Beständigkeit der erfindungsgemäßen Varianten I und II dem Standartstahl in Meerwasser überlegen sind.

**Tabelle 4**

| Stahl | I | II | B | E | F |
|---|---|---|---|---|---|
| Masseverlustrate (g/m²h) in 1 % H₂SO₃ | 0 | 0 | 0,33 | 1,56 | 0 |
| Durchbruchspotential (mV) In 3% NaCl | 700 | 750 | 100 | - | 480 |

Durch die Erweiterung des C+N-Ansatzes ist der erfindungsgemäße Stahl kostengünstig herzustellen, d.h. offener Erschmelzung ohne Druck oder Pulvermetallurgie, und erreicht eine hervorragende Kombination aus mechanischen, chemischen, tribologischen und physikalischen Eigenschaften: Daraus ergeben sich insbesondere folgende Verwendungsbeispiele für den erfindungsgemäßen Stahl.
(a) Brechwerkzeuge in einem Bergwerk sind korrosivem Grubenwasser bei leicht erhöhter Temperatur ausgesetzt und benötigen neben Korrosionswiderstand eine hohe Dehngrenze und Verschleißbeständigkeit.
(b) Kappenringe als Halterung für Wicklungsenden in Kraftwerksgeneratoren werden kalt ausgeweitet auf hohe Dehngrenze, müssen dabei unmagnetisch sein und dürfen im Betrieb nicht korrodieren.
(c) Wälzlager in der Nähe supraleitender Magnete müssen hochfest, nicht magnetisierbar und häufig auch nichtrostend sein.
(d) Starke Magnete üben große Kräfte aus, die von nicht-magnetisierbaren festen Rahmen gehalten werden müssen. Hier wie auch bei (a) bietet Formguss eine kostengünstige Fertigung.
(e) Kraft x Weg bestimmt die Brucharbeit im Zugversuch. Die hohe Dehngrenze, Verfestigung und Bruchdehnung verleihen dem erfindungsgemäßen Stahl ein ungewöhnlich hohes Arbeitsvermögen, das zum Verzehr von Stoßenergie, wie z.B. beim Fahrzeugcrash genutzt werden kann.
(f) Zur Vermeidung von Nickelallergie bieten sich nickelfreie, nichtrostende, austenitische Stähle für die Medizintechnik an.

## Patentansprüche

1. Korrosionsbeständiger, austenitischer Stahl mit der folgenden Zusammensetzung in Masse-%
16 bis 21 % Chrom
16 bis 21 % Mangan
0,5 bis 2,0 % Molybdän
insgesamt 0,80 bis 1,1 % Kohlenstoff und Stickstoff,
und mit einem Kohlenstoff / Stickstoff Verhältnis von 0,5 bis 1,1,
Rest Eisen sowie einen Gesamtgehalt von ≤ 2,5 % an erschmelzungsbedingten Verunreinigungen.

2. Korrosionsbeständiger, austenitischer Stahl nach Anspruch 1, **dadurch gekennzeichnet, dass** der Gehalt an Kohlenstoff und Stickstoff insgesamt 0,80 bis 0,95 Masse-% beträgt

3. Korrosionsbeständiger, austenitischer Stahl nach Anspruch 1, **dadurch gekennzeichnet, dass** der Gehalt an Kohlenstoff und Stickstoff insgesamt 0,95 bis 1,1 Masse-% beträgt.

4. Korrosionsbeständiger, austenitischer Stahl nach wenigstens einem der Ansprüche 1 bis 3, **dadurch gekennzeichnet, dass** der Gehalt an Molybdän 0,5 bis 1,2 Masse-% beträgt.

5. Korrosionsbeständiger, austenitischer Stahl nach wenigstens einem der Ansprüche 1 bis 3, **dadurch gekennzeichnet, dass** der Gehalt an Molybdän 1,2 bis 2,0 Masse-% beträgt.

6. Korrosionsbeständiger, austenitischer Stahl nach wenigstens einem der Ansprüche 1 bis 5, **dadurch gekennzeichnet, dass** der Gehalt an Nickel als erschmelzungsbedingte Verunreinigung weniger als 0,2 Masse-% beträgt.

7. Korrosionsbeständiger, austenitischer Stahl nach wenigstens einem der Ansprüche 1 bis 6, schmelzbar unter normalem Atmosphärendruck von in etwa 1 bar.

8. Korrosionsbeständiger, austenitischer Stahl nach Anspruch 2, **dadurch gekennzeichnet, dass** die 0,2 Dehngrenze nach dem Lösungsglühen 450 MPa überschreitet

9. Korrosionsbeständiger, austenitischer Stahl nach Anspruch 3, **dadurch gekennzeichnet, dass** die 0,2 Dehngrenze nach dem Lösungsglühen 550 MPa überschreitet.

10. Korrosionsbeständiger, austenitischer Stahl nach wenigstens einem der Ansprüche 1 bis 9, eingesetzt zur Herstellung von hochfesten, nichtrostenden, verschleißbeständigen und/oder nichtmagnetisierbaren Werkstücken.

11. Korrosionsbeständiger, austenitischer Stahl nach wenigstens einem der Ansprüche 1 bis 10, **gekennzeichnet durch** folgende Zusammensetzung X50CrMn19-19.

12. Korrosionsbeständiger, austenitischer Stahl nach wenigstens einem der Ansprüche 1 bis 10, **gekennzeichnet durch** folgende Zusammensetzung X35 CrMn18-19.

13. Verfahren zur Herstellung eines korrosionsbeständigen, austenitischen Stahls mit der folgenden Zusammensetzung in Masse-%
16 bis 21 % Chrom
16 bis 21 % Mangan
0,5 bis 2,0 % Molybdän
insgesamt 0,80 bis 1,1 % Kohlenstoff und Stickstoff,
und mit einem Kohlenstoff 1 Stickstoff Verhältnis von 0,5 bis 1,1,
Rest Eisen, sowie einen Gesamtgehalt von ≤ 2,5 % an erschmelzungsbedingten Verunreinigungen
durch Erschmelzen unter einem Atmosphärendruck von rund 1 bar und anschließende Formgebung.

14. Verfahren zur Herstellung eines korrosionsbeständigen, austenitischen Stahl nach Anspruch 13, **dadurch gekennzeichnet, dass** die Formgebung gewählt wird aus der Gruppe umfassend Gießen, Pulvermetallurgie, Umformen und Schweißen.

15. Verfahren zur Herstellung eines korrosionsbeständigen, austenitischen Stahl, nach Anspruch 13, **dadurch gekennzeichnet, das** der Stahl als Schicht auf ein metallisches Substrat aufgebracht wird.

16. Verwendung des korrosionsbeständigen, austenitischen Stahles nach wenigstens einem der Ansprüche 1 bis 12 oder des nach dem Verfahren gemäß der Ansprüche 13 bis 15 hergestellten Stahles, als verschleißbeständige Werkstücke zur Gewinnung, Aufbereitung und Verbauung mineralischer Güter.

17. Verwendung des korrosionsbeständigen, austenitischen Stahles nach wenigstens einem der Ansprüche 1 bis 12 oder des nach dem Verfahren gemäß der Ansprüche 13 bis 15 hergestellten Stahles, für nichtmagnetisierbare Kappenringe, die kaltverfestigt sein können, und in elektrischen Generatoren eingesetzt werden.

18. Verwendung des korrosionsbeständigen, austenitischen Stahles nach wenigstens einem der Ansprüche 1 bis 12 oder des nach dem Verfahren gemäß der Ansprüche 13 bis 15 hergestellten Stahles, für nichtmagnetisierbare Wälzlager, die kaltverfestigt sein können und in der Nähe starker Magnetfelder eingesetzt werden.

19. Verwendung des korrosionsbeständigen, austenitischen Stahles nach wenigstens einem der Ansprüche 1 bis 12 oder des nach dem Verfahren gemäß der Ansprüche 13 bis 15 hergestellten Stahles, für nichtmagnetisierbare Rahmen oder Halterungen starker Magnetspulen zur Aufnahme der mechanischen Kräfte.

20. Verwendung des korrosionsbeständigen, austenitischen Stahles nach wenigstens einem der Ansprüche 1 bis 12 oder des nach dem Verfahren gemäß der Ansprüche 13 bis 14 hergestellten Stahles, für Bauteile mit großem Arbeitsvermögen zum Energieverzehr durch plastische Verformung.

## Claims

1. A corrosion-resistant austenitic steel having the following composition, in % by mass:
16-21% chromium
16-21% manganese
0.5-2.0% molybdenum
a total of 0.80-1.1 % carbon and nitrogen,
and having a carbon/nitrogen ratio of 0.5-1.1,
the balance being iron, and a total content of ≤ 2.5% of impurities caused by the melting process.

2. The corrosion-resistant austenitic steel according to claim 1, **characterized in that** the total content of carbon and nitrogen is 0.80-0.95% by mass.

3. The corrosion-resistant austenitic steel according to claim 1, **characterized in that** the total content of carbon and nitrogen is 0.95-1.1 % by mass.

4. The corrosion-resistant austenitic steel according to at least one of claims 1 to 3, **characterized in that** the content of molybdenum is 0.5-1.2% by mass.

5. The corrosion-resistant austenitic steel according to at least one of claims 1 to 3, **characterized in that** the content of molybdenum is 1.2-2.0% by mass.

6. The corrosion-resistant austenitic steel according to at least one of claims 1 to 5, **characterized in that** the content of nickel as the melt-induced impurity is less than 0.2% by mass.

7. The corrosion-resistant austenitic steel according to at least one of claims 1 to 6, meltable under normal atmospheric pressure of about 1 bar.

8. The corrosion-resistant austenitic steel according to claim 2, **characterized in that** the 0.2 yield strength after solution annealing exceeds 450 MPa.

9. The corrosion-resistant austenitic steel according to claim 3, **characterized in that** the 0.2 yield strength after solution annealing exceeds 550 MPa.

10. The corrosion-resistant austenitic steel according to at least one of claims 1 to 9, used for producing high-strength, stainless, wear-resistant and/or non-magnetizable workpieces.

11. The corrosion-resistant austenitic steel according to at least one of claims 1 to 10, **characterized by** the following composition X50CrMn19-19.

12. The corrosion-resistant austenitic steel according to at least one of claims 1 to 10, **characterized by** the following composition X35CrMn18-19.

13. A method for producing a corrosion-resistant austenitic steel having the following composition, in % by mass:
16-21% chromium
16-21% manganese
0.5-2.0% molybdenum
a total of 0.80-1.1 % carbon and nitrogen,
and having a carbon/nitrogen ratio of 0.5-1.1,
the balance being iron, and a total content of ≤ 2.5% of impurities caused by the melting process
by melting under atmospheric pressure of about 1 bar and subsequent shaping.

14. The method for producing a corrosion-resistant austenitic steel according to claim 13, **characterized in that** shaping is selected from the group consisting of casting, powder metallurgy, forming and welding.

15. The method for producing a corrosion-resistant austenitic steel, according to claim 13, **characterized in that** the steel is applied as a layer onto a metallic substrate.

16. Use of the corrosion-resistant austenitic steel according to at least one of claims 1 to 12 or of the steel produced according to the method according to claims 13 to 15, as wear-resistant workpieces for obtaining and processing mineral articles and for using them up in building.

17. Use of the corrosion-resistant austenitic steel according to at least one of claims 1 to 12 or of the steel produced according to the method according to claims 13 to 15, for non-magnetizable cap rings which can be work-hardened and are used in electric generators.

18. Use of the corrosion-resistant austenitic steel according to at least one of claims 1 to 12 or of the steel produced according to the method according to claims 13 to 15, for non-magnetizable rolling bearings which can be work-hardened and are used in the vicinity of strong magnetic fields.

19. Use of the corrosion-resistant austenitic steel according to at least one of claims 1 to 12 or of the steel produced according to the method according to claims 13 to 15, for non-magnetizable frames or mounts of strong magnetic coils for absorbing the mechanical forces.

20. Use of the corrosion-resistant austenitic steel according to at least one of claims 1 to 12 or of the steel produced according to the method according to claims 13 to 14, for components having a great forming capacity for energy consumption by plastic deformation.

## Revendications

1. Acier austénitique résistant à la corrosion ayant la composition suivante, en % en masse :
16 à 21 % de chrome
16 à 21 % de manganèse
0,5 à 2,0 % de molybdène
au total 0,80 à 1,1 % de carbone et d'azote,
et ayant un rapport carbone/azote de 0,5 à 1,1,
le reste étant constitué de fer, et une teneur totale en impuretés dues à la fusion ≤ 2,5 %.

2. Acier austénitique résistant à la corrosion selon la revendication 1, **caractérisé en ce que** la teneur en carbone et en azote est au total de 0,80 à 0,95 % en masse.

3. Acier austénitique résistant à la corrosion selon la revendication 1, **caractérisé en ce que** la teneur en carbone et en azote est au total de 0,95 à 1,1 % en masse.

4. Acier austénitique résistant à la corrosion selon au moins l'une des revendications 1 à 3, **caractérisé en ce que** la teneur en molybdène est de 0,5 à 1, 2 % en masse.

5. Acier austénitique résistant à la corrosion selon au moins l'une des revendications 1 à 3, **caractérisé en ce que** la teneur en molybdène est de 1,2 à 2,0 % en masse.

6. Acier austénitique résistant à la corrosion selon au moins l'une des revendications 1 à 5, **caractérisé en ce que** la teneur en nickel, en tant qu'impureté due à la fusion, est de moins de 0,2 % en masse.

7. Acier austénitique résistant à la corrosion selon au moins l'une des revendications 1 à 6, pouvant fondre sous une pression atmosphérique normale d'environ 1 bar.

8. Acier austénitique résistant à la corrosion selon la revendication 2, **caractérisé en ce que** la limite d'élasticité à 0,2 % après le recuit de mise en solution est supérieure à 450 MPa.

9. Acier austénitique résistant à la corrosion selon la revendication 3, **caractérisé en ce que** la limite d'élasticité à 0,2 % après le recuit de mise en solution est supérieure à 550 MPa.

10. Acier austénitique résistant à la corrosion selon au moins l'une des revendications 1 à 9, utilisé pour fabriquer des pièces à haute résistance, inoxydables, résistantes à l'usure et/ou non magnétisables.

11. Acier austénitique résistant à la corrosion selon au moins l'une des revendications 1 à 10, **caractérisé par** la composition suivante : X50CrMn19-19.

12. Acier austénitique résistant à la corrosion selon au moins l'une des revendications 1 à 10, **caractérisé par** la composition suivante : X35CrMn18-19.

13. Procédé pour produire un acier austénitique résistant à la corrosion ayant la composition suivante, en % en masse :
16 à 21 % de chrome
16 à 21 % de manganèse
0,5 à 2,0 % de molybdène
au total 0,80 à 1,1 % de carbone et d'azote,
et ayant un rapport carbone/azote de 0,5 à 1,1, le reste étant constitué de fer, et une teneur totale en impuretés dues à la fusion ≤ 2,5 %
par fusion sous une pression atmosphérique d'environ 1 bar et mise en forme ultérieure.

14. Procédé pour produire un acier austénitique résistant à la corrosion selon la revendication 13, **caractérisé en ce que** la mise en forme est choisie dans le groupe comprenant une coulée, une métallurgie des poudres, un formage et un soudage.

15. Procédé pour produire un acier austénitique résistant à la corrosion selon la revendication 13, **caractérisé en ce que** l'acier est appliqué sous forme de couche sur un substrat métallique.

16. Utilisation de l'acier austénitique résistant à la corrosion selon au moins l'une des revendications 1 à 12 ou de l'acier produit selon le procédé des revendications 13 à 15, en tant que pièces résistantes à l'usure pour l'obtention et le traitement de produits minéraux et leur utilisation dans la construction.

17. Utilisation de l'acier austénitique résistant à la corrosion selon au moins l'une des revendications 1 à 12 ou de l'acier produit selon le procédé des revendications 13 à 15, pour des anneaux de retenue non magnétisables qui peuvent être écrouies et qui sont utilisées dans des générateurs électriques.

18. Utilisation de l'acier austénitique résistant à la corrosion selon au moins l'une des revendications 1 à 12 ou de l'acier produit selon le procédé des revendications 13 à 15, pour des paliers à roulement non magnétisables qui peuvent être écrouis et utilisés à proximité de puissants champs magnétiques.

19. Utilisation de l'acier austénitique résistant à la corrosion selon au moins l'une des revendications 1 à 12 ou de l'acier produit selon le procédé des revendications 13 à 15, pour des châssis non magnétisables ou des supports de puissantes bobines magnétiques pour l'absorption des forces mécaniques.

20. Utilisation de l'acier austénitique résistant à la corrosion selon au moins l'une des revendications 1 à 12 ou de l'acier produit selon le procédé des revendications 13 à 14, pour des composants ayant une importante capacité de travail pour une consommation d'énergie par déformation plastique.
